Europäisches Patentamt

European Patent Office

Office européen des brevets

(19)

(11) Veröffentlichungsnummer: **0 081 684**
B1

# (12) EUROPÄISCHE PATENTSCHRIFT

(45) Veröffentlichungstag der Patentschrift: 30.09.87

(21) Anmeldenummer: 82110437.9

(22) Anmeldetag: 11.11.82

(51) Int. Cl.⁴: **H 02 P 6/02,** H 02 P 7/00

(54) **Antrieb für Arbeitsmaschinen, insbesondere Industrienähmaschinen.**

(30) Priorität: 13.11.81 DE 3145232

(43) Veröffentlichungstag der Anmeldung:
22.06.83 Patentblatt 83/25

(45) Bekanntmachung des Hinweises auf die
Patenterteilung:
30.09.87 Patentblatt 87/40

(84) Benannte Vertragsstaaten:
CH DE FR GB IT LI

(56) Entgegenhaltungen:
GB-A-2 059 110
US-A-4 208 621
US-A-4 250 544
US-A-4 270 074

MICROPROCESSORS AND MICROSYSTEMS,
Band 5, Nr. 8, Oktober 1981, Whitstable, Kent
(GB) K. FUJIKAWA "Microcomputer control for
an industrial sewing machine" Seiten 351-356

(73) Patentinhaber: Quick-Rotan Elektromotoren
GmbH
Gräfenhäuser Strasse 85
D-6100 Darmstadt (DE)

(72) Erfinder: Angersbach, Wolfgang, Dipl.-Ing.
Alfred-Messel-Weg 40
D-6100 Darmstadt (DE)
Erfinder: Matthess, Bernd, Ing. grad.
Fasanenring 12
D-6114 Gross-Umstadt/Semd (DE)

(74) Vertreter: Schwan, Gerhard, Dipl.-Ing.
Elfenstrasse 32
D-8000 München 83 (DE)

Courier Press, Leamington Spa, England.

## Beschreibung

Die Erfindung betrifft einen Antrieb mit Mikroprozessor für Arbeitsmaschinen, insbesondere Industrienähmaschinen, mit einem drehzahlgeregelten kollektorlosen Gleichstrommotor, dessen Wicklungen über eine in Abhängigkeit von der Rotorstellung des Motors angesteuerte Leistungsstufe mit Vollbrückenschaltung gespeist sind, wobei zur Drehzahlregelung jeweils nur einer der beiden im Zuge der Kommutierung gleichzeitig angesteuerten Brückenzweige mit einem getakteten Signal beaufschlagt ist.

Ein Antrieb dieser Art ist aus der US—A—4 250 544 bekannt. Dabei werden Leistungstransistoren der Vollbrückenschaltung mittels einer Mikroprozessoranordnung wechselweise stromführend und nicht stromführend gemacht. Der über die Vollbrückenschaltung fließende Speisestrom wird gemessen, und ein diesem Strom entsprechendes Spannungssignal wird einem Stromkomparator zugeführt, der das Iststromsignal mit einem Sollstromsignal vergleicht. Das Sollstromsignal wird aus einem Vergleich der jeweiligen Rotoriststellung mit einer für den betreffenden Zeitpunkt der Solldrehzahl entsprechenden Rotorsollstellung gewonnen. Das Sollstromsignal hängt dementsprechend von der Abweichung des Positionsistwertes von dem Positionssollwert für die betreffende Kommutierungsphase ab. Die in den getakteten Brückenzweigen liegenden Leistungstransistoren werden in Abhängigkeit von dem Vergleich zwischen Soll- und Iststrom angesteuert. Dabei kann es zu Problemen im Überlastfall, beispeilsweise beim Blockieren des Motors, kommen. Blockiert nämlich der Motor, steigt das die Abweichung der Istposition des Rotors von dessen Sollposition anzeigende Fehlersignal rasch an. Entsprechend wird der dem Stromkomparator aufgeschaltete Sollstromwert erhöht, was zu einer Nachführung des Iststromwertes führt. Infolgedessen läßt der Regler den Motorstrom ansteigen.

Es ist ferner bekannt (US—A—4 270 074), bei einem drehzahlgeregelten kollektorlosen Gleichstrommotor eine Sicherheitsüberwachungsschaltung vorzusehen, die bei Überlast die Vollbrückenschaltung einer die Motorwicklungen speisenden Leistungsstufe sperrt. Einzelheiten der Drehzahlregelschaltung sind dort nicht offenbart.

Des weiteren ist ein Antrieb mit einem mechanisch kommutierten Kollektormotor bekannt (DE—A—2 930 907), der mit seinen Wicklungsspeiseklemmen in die Diagonale einer vier Leistungstransistoren aufweisenden Vollbrückenschaltung gelegt ist. Zur Drehzahlsteuerung des Kollektormotors erfolgt eine Pulsbreitensteuerung des Transistors in einem Brückenzweig bei Rechtslauf des Motors sowie des Transistors in einem anderen Brückenzweig bei Linkslauf des Motors, während der jeweils zugeordnete zweite Transistor der Brücke mit einem Dauersignal angesteuert wird, das so lange anliegt, wie sich der Motor in der einen bzw. in der anderen Richtung drehen soll.

Im übrigen sind auch mikroprozessorgesteuerte Positionierantriebe für Nähmaschinen bekannt, die mit einem drehzahlgeregelten Kupplungsmotor ausgestattet sind (GB—A—2 059 110).

Der Erfindung liegt die Aufgabe zugrunde, einen Antrieb zu schaffen, der für den Einsatz bei Arbeitsmaschinen, wie Industrienähmaschinen, Werkzeugmaschinen und dergleichen geeignet ist, wo hohe Antriebsleistungen notwendig sind, große Belastungsschwankungen auftreten und eine flexible Anpassungsmöglichkeit an die jeweiligen speziellen Antriebsaufgaben erforderlich ist, und der einen besonders zuverlässigen Überlastschutz bietet.

Ausgehend von einem Antrieb der eingangs genannten Art wird diese Aufgabe erfindungsgemäß dadurch gelöst, daß der Mikroprozessor mit Programm für Positionierung des Arbeitswerkzeugs und für Zusatzfunktionen versehen ist, daß das getaktete Signal ein impulsbreitenmoduliertes Taktungssignal von fest vorgegebener Taktfrequenz ist und daß der Leistungsstufe zusätzlich zur Drehzahlregelschaltung eine auf Überstrom ansprechende Sicherheitsüberwachungsschaltung zum Sperren der Vollbrückenschaltung im Überlastfall zugeordnet ist.

Der erfindungsgemäß aufgebaute Antrieb ist gegen Überlastungen, mit denen bei Arbeitsmaschinen der vorliegend betrachteten Art gerechnet werden muß, wirkungsvoll geschützt. Der Antrieb bietet ferner großen Bedienungskomfort. Kundenspezifischen Anforderungen kann auf einfache Weise Rechnung getragen werden. Im Vergleich zu Kupplungsmotorantrieben werden mechanische Verschleißteile, wie Kupplungs- und Bremsscheiben, eingespart. Der erzielte Wirkungsgrad ist größer. Es lassen sich höhere Positioniergenauigkeiten erreichen. Der Antrieb kann ohne Riemenübersetzung innerhalb besonders großer Drehzahlbereiche, beispielsweise von 10 bis 10.000 U/min, einwandfrei geregelt werden. Der Schaltungsaufwand für die Drehzahlregelung ist gering gehalten. Die Mikroprozessorsteuerung kann vorteilhaft in der in der GB—A—2 059 110 erläuterten Weise ausgebildet sein.

Zweckmäßig wird jeweils der an Masse liegende Brückenzweig mit dem Taktungssignal beaufschlagt. Letzteres hat in weiterer Ausgestaltung der Erfindung eine fest vorgegebene Taktfrequenz von ausreichender Höhe, beispielsweise 9 kHz, um akustische Störgeräusche auszuschließen.

Zur Stromüberwachung liegt vorzugsweise in jeder Motorphase eine Vergleicherstufe, mittels deren die Vollbrückenschaltung bei einem Überschreiten der Sättigungsspannung der die Brückenschaltung bildenden Leistungstransistoren sperrbar ist.

Um Kurzschlüsse bei der Kommutierung zu vermeiden, sind zweckmäßig sämtliche Brückenzweige im Kommutierungszeitpunkt für eine kurze Zeitspanne sperrbar. Ein solche Sperrung ist zweckmäßig auch bei einer Drehrichtungsumkehr des Antriebs vorgesehen.

Um unkontrollierte Einschaltstöße zu verhindern, ist vorzugsweise der Drehzahlregler während des Stillstands des Antriebs über Optokoppler sperrbar. Um eine geführte Drehzahlverminderung beim Positionieren zu erreichen, sind vorteilhaft mittels der Mikroprozessorsteuerung beim Positionieren stufenweise verringerte Drehzahlsollwerte bis zum Stillstand aufschaltbar.

Weitere Merkmale der Erfindung ergeben sich aus der nachstehenden Erläuterung eines bevorzugten Ausführungsbeispiels. In den beiliegenden Zeichnungen zeigen:

Fig. 1 ein Prinzipschaltbild eine erfindungsgemäß aufgebauten Antriebs,

Fig. 2 die Kommutierungssignale sowie die Paarungen der der Reihe nach angesteuerten Leistungstransistoren bei Rechtslauf und Linkslauf,

Fign. 3 und 4 die Treibersignale für die eine bzw. die andere Hälfte der Vollbrückenschaltung,

Fign. 5 bis 9 zusammen ein Detailschaltbild des Antriebs nach Fig. 1,

Fig. 10 die Art und Weise, in welcher die Fign. 5 bis 9 zusammenzulegen sind, und

Fig. 11 verschiedene Signalverläufe zur Erläuterung der Erzeugung der impulsbreitenmodulierten Taktungssignale.

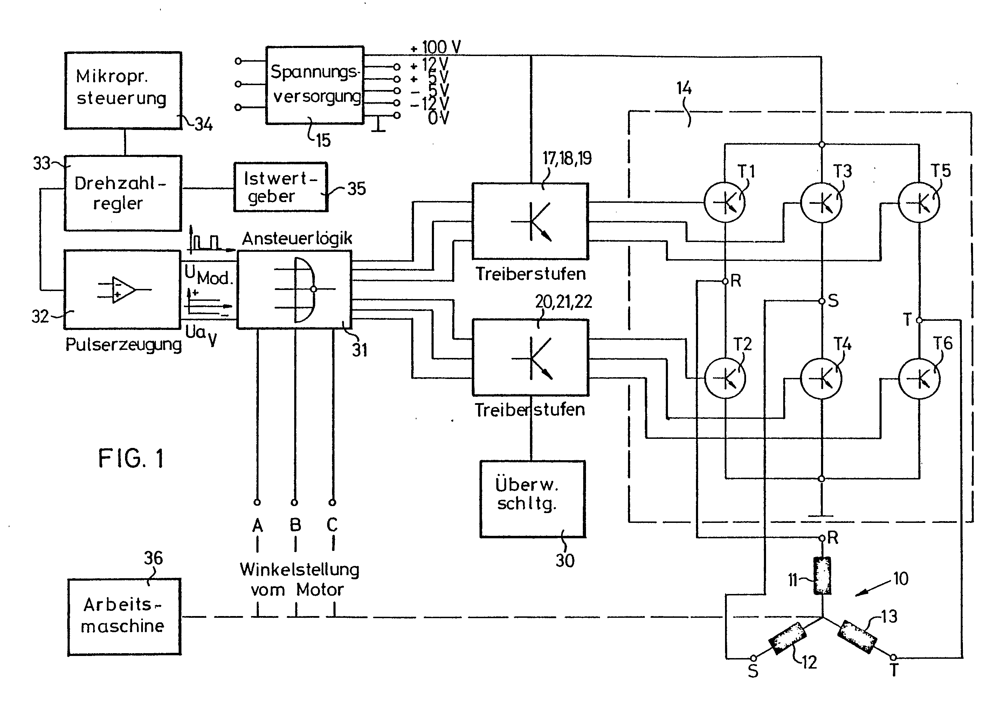

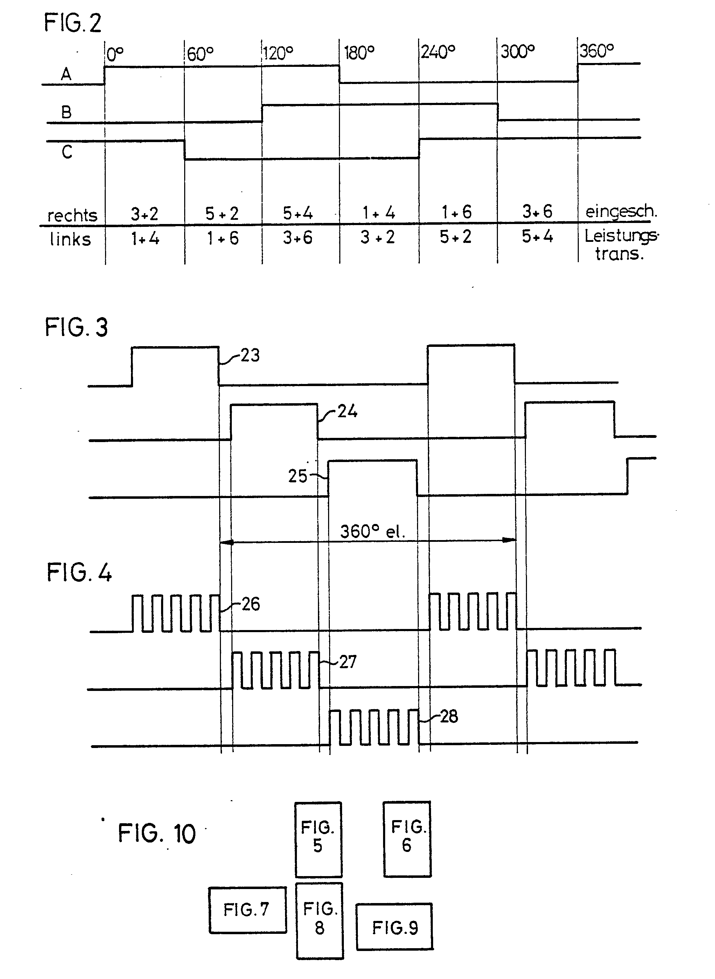

Der in dem Prinzipschaltbild der Fig. 1 veranschaulichte Antrieb weist einen kollektorlosen Gleichstrommotor mit einem Permanentmagnetrotor und einer dreiphasigen, zwei- oder mehrpoligen, vorzugsweise, vierpoligen, Statorwicklung auf, die bei 10 angedeutet ist. Im Ausführungsbeispiel sind die Statorwicklungsstränge 11, 12, 13 in Stern geschaltet. Ihre Anschlüsse sind mit R, S und T bezeichnet. Dem Motor sind in üblicher Weise drei Drehstellungsdetektoren, z.B. Hallgeneratoren, zugeordnet, die den Kommutierungszeitpunkt bestimmende Kommutierungssignale A, B und C (Fig. 2) liefern. Die Wicklungsstränge 11, 12, 13 werden über eine in Abhängigkeit von der Rotorstellung angesteuerte Leistungsstufe 14 gespeist. Die Leistungsstufe 14 ist als dreiphasige Vollbrückenschaltung mit Leistungstransistoren T1 bis T6 aufgebaut, so daß der Motor im 4-Quadrantenbetrieb arbeiten kann, wobei die von einer Spannungsversorgung 15 gelieferte Versorgungsgleichspannung von beispielsweise +100 V aufgeschaltet wird. In Fig. 2 ist dargestellt, welche der Leistungstransistoren T1 bis T6 jeweils durchgeschaltet sind, wenn der Motor im Rechtslauf oder in Linkslauf betrieben wird. Drei Treiberstufen 17, 18, 19 versorgen die drei Leistungstransistoren T1, T3 und T5 abwechselnd mit Strom in der Kommutierungsfrequenz. Drei weitere Treiberstufen 20, 21, 22 sind vorgesehen, um die Leistungstransistoren T2, T4 und T6 ebenfalls abwechselnd mit Strom in der Kommutierungsfrequenz zu speisen, wobei jedoch in diesem Fall eine impulsbreitenmodulierte Taktung mit fest vorgegebener Frequenz von beispeilsweise 9 kHz erfolgt. Diese Verhältnisse sind in den Fign. 3 und 4 skizziert, wo die den Transistoren T1, T3 und T5 zugehenden Treibersignale 23, 24, 25 und die getakteten Treibersignale 26, 27, 28 für die Leistungstransistoren T2, T4 und T6 veranschaulicht sind. Den Treiberstufen 20, 21, 22 ist eine Überwachungsschaltung 30 zugeordnet, die auf Überstrom anspricht und die Leistungsstufe 14 im Überlastfall sperrt. Auf diese Weise werden die Leistungstransistoren T1 bis T6 gegen das Auftreten übermäßig hoher Kollektorströme, beispielsweise verursacht durch ein Blockieren des Motors, geschützt.

Die Treiberstufen 17 bis 22 werden von einer Ansteuerlogik 31 gesteuert. Die Ansteuerlogik 31 wertet die Kommutierungssignale A, B, C aus. Sie gibt die Reihenfolge der Ansteuerung der Treiberstufen in Abhängigkeit von der gewählten Drehrichtung des Motors vor.

Die Taktungssignale werden von einem Taktpulserzeuger und Pulsbreitenmodulator 32 mit der vorgewählten Frequenz von beispielsweise 9 kHz auf die Ansteuerlogik 31 gegeben. Die jeweilige Pulsbreite wird von eimen Drehzahlregler 33 bestimmt, welcher den Drehzahlsollwert und den Drehzahlistwert miteinander vergleicht. Die Pulsbreite gibt unmittelbar den in den Motor flissenden Strom und damit die Drehzahl vor. Der Drehzahlsollwert wird von einer Mikroprozessorsteuerung 34 aufgeschaltet, während der Drehzahlistwert von einem am Motor angebauten Positions- und Inkrementgeber 35 beispielsweise über eine Frequenz-Spannungswandlung erzeugt wird. Der Regelbereich kann beispielsweise im Falle einer Motorleistung von bis zu 1,5 kW zwischen 10 und 6.000 U/min liegen.

Die von dem Motor angetriebene Arbeitsmaschine, beispielsweise eine Industrienähmaschine, ist bei 36 angedeutet. Über die Mikroprozessorsteuerung 34 lassen sich nähmaschinenspezifische Funktionen, wie pedalabhängige Arbeitsdrehzahl, Positionierung in Nadeloben- oder Nadel-Unten-Stellung auf z.B ±2°, Fadenabschneiden, Presserfußlüftung usw. steuern.

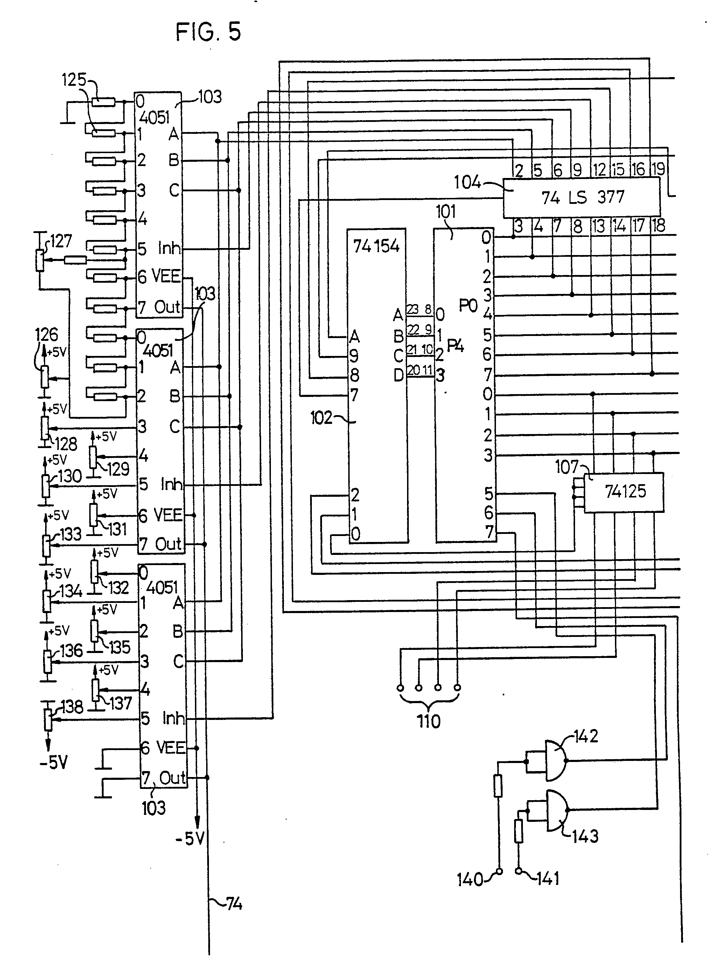

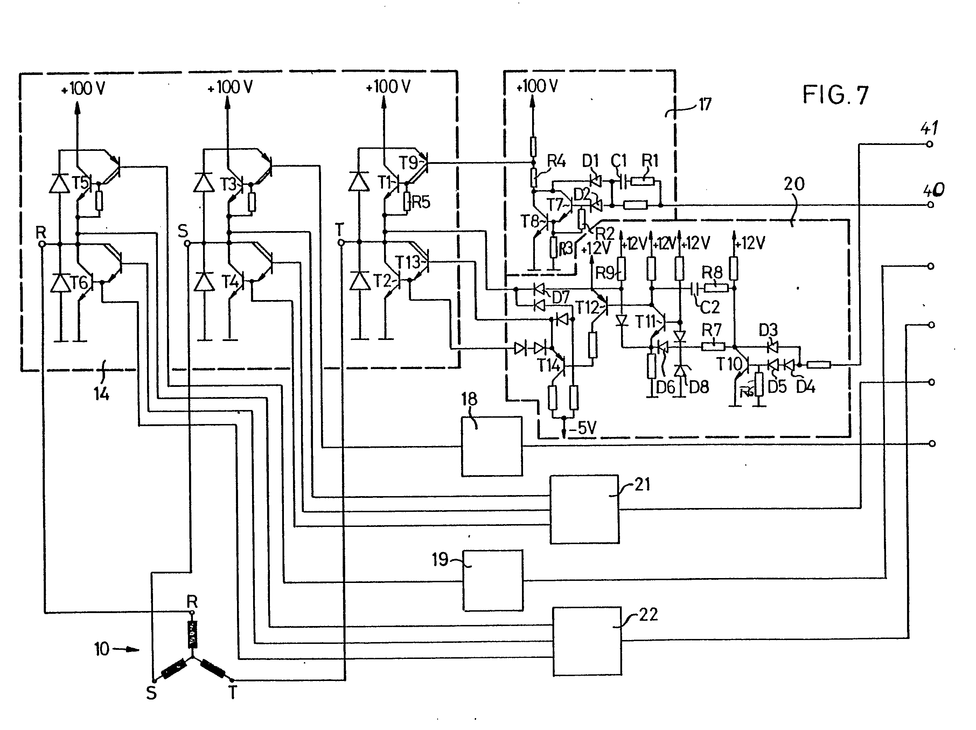

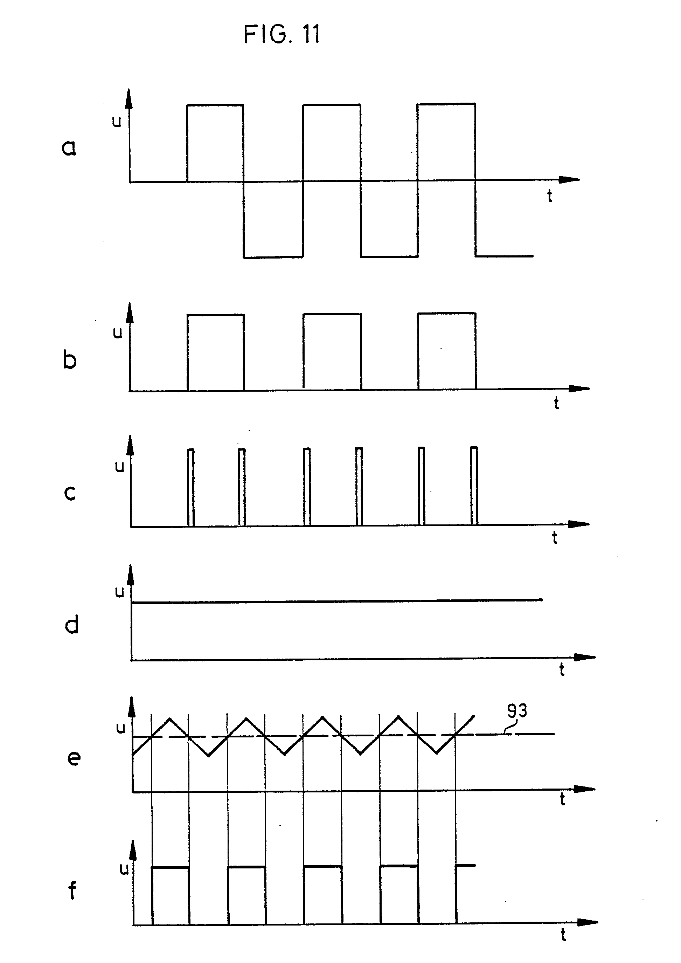

Ein Schaltbild einer bevorzugten Ausführungsform eines für eine Industrienähmaschine bestimmten Antriebs ist in den Fign. 5 bis 9 veranschaulicht. Fig. 10 zeigt, wie diese Figuren zusammenzulegen sind. Die Leistungsstufe 14 sowie die Treiberstufen 17 und 20 für die Leistungstransistoren T1 und T2 sind im einzelnen in Fig. 7 dargestellt. Die Treiberstufen 18 und 19 sind in gleicher Weise wie die Treiberstufe 17 aufgebaut, während die Treiberstufen 21 und 22 ebenso wie die Treiberstufe 20 ausgelegt sind.

Am Eingang 40 der Treiberstufe 17 wird von der Ansteuerlogik 31 ein C-MOS-Logiksignal von beispielsweise 0 oder 12 V zur Verfügung gestellt. Ein Eingangssignal O V bewirkt eine Sperrung der zugehörigen Endstufe, während mittels des Eingangssignals von 12 V die Endstufe durchgeschaltet wird. Die Treiberstufe 17 weist in Darlington-Configuration geschaltete Transistoren T7, T8, auf. Dem Transistor T7 ist ein RC-Glied, bestehend aus einem Widerstand R1 und einem Kondensator C1 vorgeschaltet. Dieses RC-Glied erlaubt es, im Einschaltaugenblick einen erhöhten Basisstrom für die Transistoren T7, T8 zu erzielen, wodurch ein schnelleres Durchschalten erreicht wird. Zwei Dioden D1, D2 halten die Darlingtonstufe T7, T8 in Quasisättigung, was ebenfalls zu einem schnellen Schaltverhalten beiträgt. Das rasche Durchschalten wird schließlich Durch die beiden Basis-Emitter-Widerstände R2, R3 unterstützt, da sie beim Abschalten ein rasches Abfließen des Basisstroms sicherstellen.

Ist die Treiberstufe 18 durchgeschaltet, kann von der Spannungsversorgung 15 ein Strom durch einen PnP-Darlington-transistor T9 zum Leistungstransistor T1 fließen, während der Basisstrom des Transistors T9 über einen Widerstand R4 und die Darlingtonstufe T7, T8 nach Masse fließt. Der Leistungstransistor T1 verstärkt seinen Basisstrom. Zur Motorwicklung kann ein Emitterstrom fließen. Ein Basis-Emitter-Widerstand R5 des Leistungstransistors T1 sorgt für verbessertes Schaltverhalten.

Ist die Treiberstufe 17 dagegen gesperrt, kann kein Basisstrom durch den Darlingtontranssistor T9 hindurchtreten. Es fließt kein Kollektorstrom und kein Basisstrom im Leistungstransistor T1. Dieser Teil der Leistungs- oder Endstufe 14 ist gesperrt.

Bei durchgeschalteter Treiberstufe 17 kommt ein Phasenstrom durch die Statorwicklung 10 erste zum Fließen, wenn gleichzeitig auch einer der beiden Leistungstransistoren T4 oder T6 geöffnet ist.

Den Treiberstufen 20, 21, 22 für die Leistungstransistoren T2, T4, T6 der an Masse liegenden Brückenzweige ist die in Fig. 1 der besseren Übersicht halber als gesonderter Block dargestellte Überwachungsschaltung 30 zugeordnet. Bei dem praktischen Ausführungsbeispiel nach Fig. 7 ist die Überwachungsschaltung in jede der Treiberstufen 20, 21, 22 integriert. Liegt am Eingang 41 der Treiberstufe 20 das Signal 0 V, an, wird die Endstufe mit dem Leistungstransistor T2 gesperrt. Die Treiberstufe 20 weist einen Eingangstransistor T10 auf, der mit Antisättigungsdioden D3, D4, D5 und einem Basis-Emitter-Widerstand R6 beschaltet ist, um ein angesichts der Taktfrequenz von 9 kHz gutes Schaltverhalten zu erzielen. Am Kollektor des Transistors T10 liegt eine Spannung von beispielsweise +12 V an. Über einen Widerstand R7 und eine Diode D6 wird der Emitter eines nachgeschalteten Transistors T11 auf eine Potential angehoben, das höher als sein Basispotential ist. Dadurch wird der Transistor T11 ebenso wie Transistoren T12 und T13 sowie der Leistungstransistor T2 gesperrt. Ein Transistor T14 hält die Basen der Transistoren T13 und T2 auf negativem Potential.

Erscheint am Eingang 41 eine positive Spannung von beispielsweise +12 V, schaltet der Transistor T10 durch. Ein Kondensator C2 kann sich über einen Widerstand R8 entladen. Dadurch wird der Transistor T12 für ca. 2 ms durchgeschaltet. Den Transistoren T13 und T2 fließt Basisstrom zu, der diese Transistoren ebenfalls zum Durchschalten veranlaßt. Da jetzt ein Strom über eine Diode D7 von einem Widerstand R9 zum Kollektor des Leistungstransistors T2 fließt, stellt sich am Emitter des Transistors T11 ein niedrigeres Potential als an der Basis dieses Transistors ein,

wodurch der Transistor T11 leitend wird. Dadurch wird auch nach Abklingen des Pulses über den Widerstand R8 und den Kondensator C2 der Transistor T12 leitend gehalten, so daß auch die Endstufe durchgeschaltet bleibt.

Kann der Leistungstransistor T2 infolge eines zu hohen Kollektorstromes, beispielsweise verursacht durch ein Blockieren des Motors oder Lieferung eines zu geringen Basisstromes infolge des Zusammenbruchs der Kleinversorgungsspannung, nicht innerhalb von 2 µs in Quasisättigung gehen, wird durch das erhöhte Kollektor-Emitter-Potential am Leistungstransistor T2 die Spannung am Emitter des Transistors T11 wieder über das Basispotential dieses Transistors angehoben, wodurch der Transistor T11 sperrt. Durch das Sperren des Transistors T11 werden auch die Transistoren T12, T13 und T2 gesperrt.

Auf diese Weise sind im Störfall der Motor und die Leistungstransistoren geschützt. Es wird dabei nur für eine Zeitspanne von 2 µs pro Puls durchgeschaltet, was für die Leistungstransistoren und den Motor unschädlich ist.

Der normale Ausschaltvorgang erfolgt durch Anlegen einer Spannungs von 0 V an den Eingang 41. Dadurch wird der Emitter des Transistors T11 auf ein höheres Potential als sein Basispotential angehoben, wodurch, wie erläutert, abgeschaltet wird.

Die Treiberstufen 18 und 19 bzw. 21 und 22 stimmen hinsichtlich Aufbau und Funktionsweise mit den Treiberstufen 17 bzw. 20 überein.

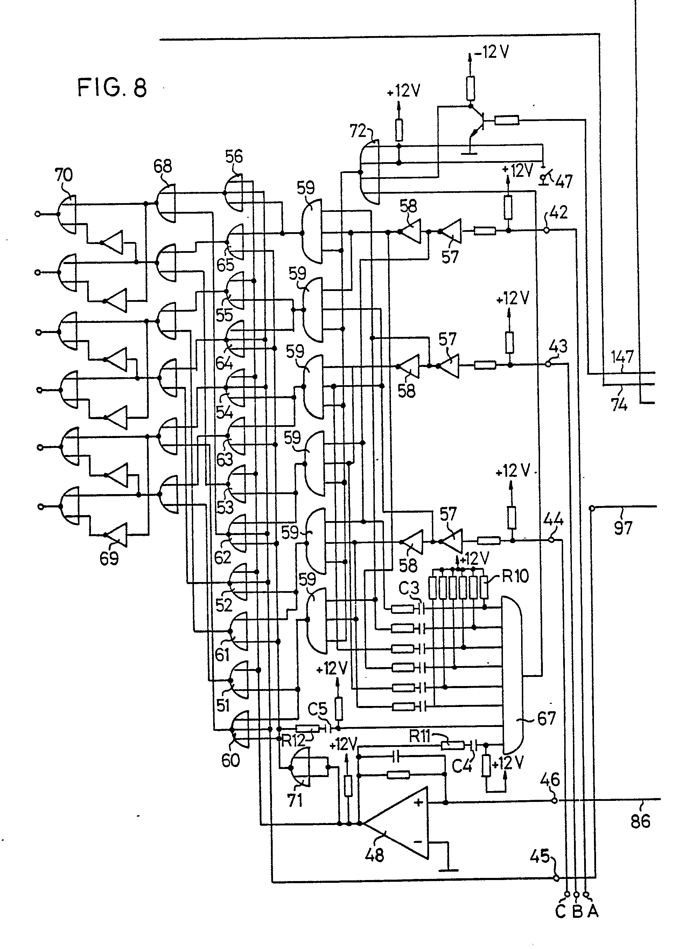

Die in Fig. 8 dargestellte Ansteuerlogik 31 hat die Aufgabe, die Kommutierungssignale A, B, C und die vom Taktimpulserzeuger und Pulsbreitenmodulator 32 angelieferten Eingangssignale so vu verknüpfen und an die Treiberstufen 17 bis 22 weiterzugeben, daß der Motor die gewünschte Bewegung ausführt. Die Kommutierungssignale A, B, C werden an Eingänge 42, 43 bzw. 44 der Ansteuerlogik 31 angelegt. Diese Signale sind, wie in Fig. 3 dargestellt, um jeweils 60°el (bei einem 4-poligen Motor entsprechend 30° mechanisch) gegeneinander versetzt. Ihre Impulsbreite entspricht jeweils 180°el. An einem Eingang 45 der Ansteuerlogik 31 liegt das vom Taktpulserzeuger 32 kommende pulsbreitenmodulierte Taktungssignal mit einer Modulationsfrequenz von 9 kHz und einem Modulationsgrad von 0 bis 100 % als +12 V-Signal an. Einem Eingang 46 der Ansteuerlogik 31 geht das Drehrichtungssignal zu, das vom Drehzahlregler 33 abgenommen wird und das bei der Drechrichtung rechts im vorliegenden Ausführungsbeispiel einen Wert von 9 bis +12 V hat, während ein Wert von 0 bis −12 V dieses Signals der Drehrichtung links entspricht. Über einen Schalter 47 lassen sich schließlich alle Endstufen gemeinsam sperren.

Wird die Ansteuerlogik 31 beispielsweise mit einem Rechtslauf-Signal beaufschlagt, wird das betreffende Analogspannungssignal mittels eines Komparators 48 in das logische Signal H entsprechend +12 V umgesetzt. Erscheint dagegen am Eingang 46 das Linkslauf-Signal, geht auf den Ausgang des Komparators 48 das logische Signal L. Der Ausgang des Komparators 48 ist an NOR-Gatter 51 bis 56 angeschlossen. Die Kommutierungssignale A, B, C werden in Invertern 57 invertiert, denen jeweils ein weiterer Inverter 58 nachgeschaltet ist. Auf diese Weise werden die invertierten Kommutierungssignal und 3-fach invertierte, d.h wieder in die ursprüngliche Form gebrachte Kommutierungssignale, an NAND-Gatter 59 geführt. Die logische Verknüpfung über diese NAND-Gatter 59, die NOR-Gatter 51 bis 56 und sechs weitere NOR-Gatter 60 bis 65 erfolgt derart, daß die Leistungstransistoren T1 bis T6 in Abhängigkeit von dem Drehrichtungssignal und den Kommutierungssignalen in der im unteren Teil der Fig. 2 angegebenen Abfolge angesteuert werden, Beispielsweise werden in dem elektrischen Winkelbereich von 0° bis 60°, wo A = H, B = L und C = H sind, bei Anliegen eines Rechtslauf-Signals am Eingang 46 die Leistungstransistoren T3 und T2 geöffnet. Dabei wird an den Leistungstransistor T3 über die Treiberstufe 18 ein H-Signal angelegt, während der Leistungstransistor T2 über die Treiberstufe 20 mit pulsbreitenmodulierten Signalen beaufschlagt wird. Diese Signale liegen an, bis sich der Motor um 30° mechanisch weitergedreht hat und die logischen Signale, A, B, C auf A = H, B = L und C = L springen. Aufgrund der jetzt neu anliegenden Kommutierungsinformation werden die Leistungstransistoren T5 und T2 angesteuert. Dieses Wechselspiel setzt sich in der in Fig. 2 veranschaulichten Weise fort.

Damit im Kommutierungszeitpunkt beim Wechsel eines oder mehrerer der Kommutierungssignale A, B, C kein Kurzschluß in der Leistungsstufe 14 auftreten kann, wird bei jeder Kommutierung eine Zwangspause von 100 µs eingelegt. Dies wird durch sechs RC-Glieder R10, C3 erreicht, die mit den Kommutierungssignalen bzw. den invertierten Kommutierungssignalen beaufschlagt und mit den Eingängen eines 8-fach NAND-Gatters 67 verbunden sind. Bei einem Kommutierungssignalwechsel werden auf diese Weise alle Endstufen für 100 µs gesperrt. Es ist daher gewährleistet, daß ein Leistungstransistor erste eingeschaltet wird, nachdem der zuvor angesteuerte Leistungstransistor sicher abgeschaltet hat. Außerdem wird durch eine logische Verknüpfung über sechs den NOR-Gattern 51 bis 56 und 60 bis 65 nachgeschaltete NOR-Gatter 68, über sechs Inverter 69 und sechs weitere NOR-Gatter 70 erreicht, daß nie beide Leistungstransistoren in zwei in Reihe geschalteten Brückenzweigen, d.h. die Transistoren T1 und T2 bzw. T3 und T4 bzw. T5 und T6, gleichzeitig angesteuert werden. Springt während des Motorlaufs das Drehrichtungssignal von Rechtslauf auf Linkslauf oder umgekehrt, was zunächst ein über den Drehzahlregler 33 erzwungenes Abbremsen bedeutet, wird gleichfalls ein Zwangspause von beispielsweise 5 ms eingelegt, damit der Motorstrom abklingen kann. Für diesen Zweck sind zwei RC-Glieder R11, C4 und R12, C5 vorgesehen, die mit dem Drehrichtungssignal bzw. dem mittels eines als Inverter geschalteten NOR-Gatters 71 invertierten Drehrichtungssignal beaufschlagt und an zwei weitere Eingänge des NAND-Gatters 67 angeschlossen sind. Diese erzwingt dann über ein NOR-Gatter 72 die gewünschte Pause. Die Leistungsstufe 14 läßt sich wahlweise auch dadurch sperren, daß an einen der drei weiteren Eingänge des dem NAND-Gatter 67 nachgeschalteten 4-fach NOR-Gatters 72 ein H-Signal angelegt wird.

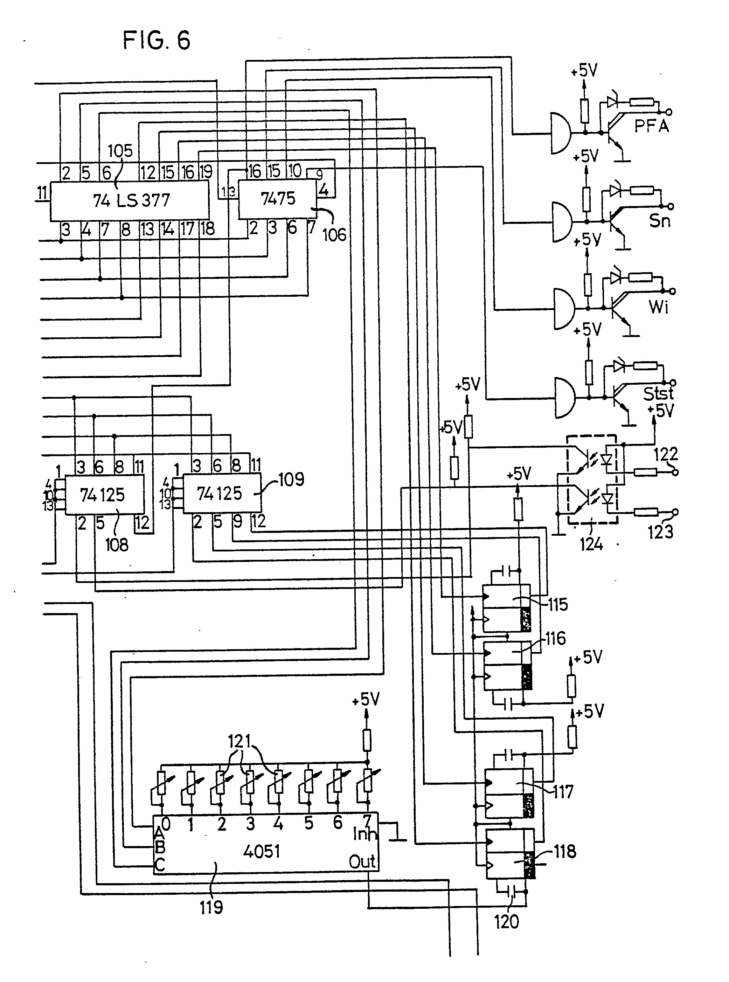

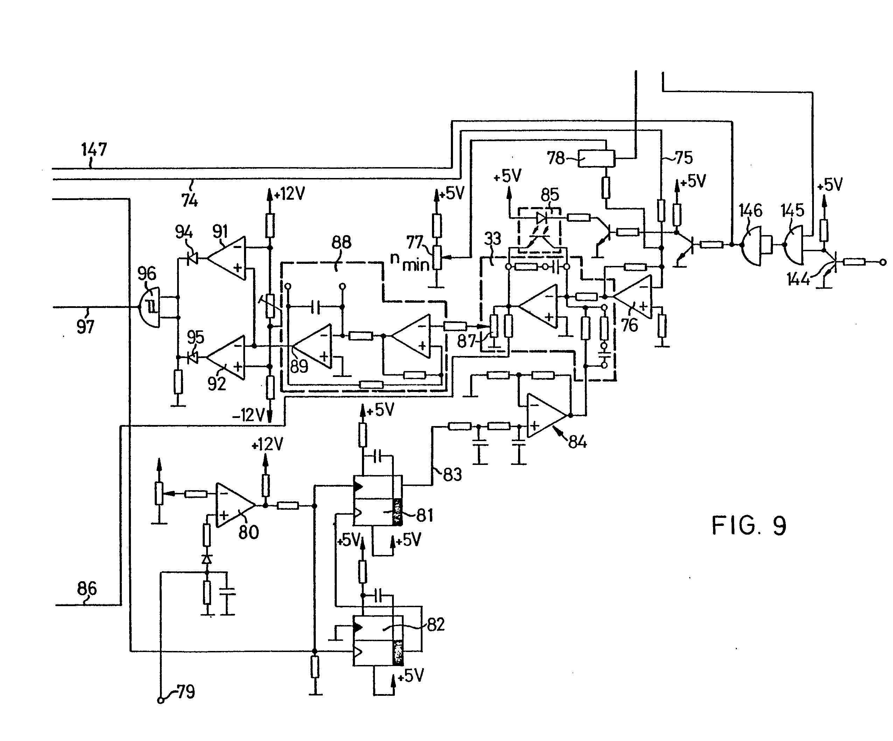

Der Takterzeuger und Pulsbreitenmodulator 32 sowie der Drehzahlregler 33 sind in Fig. 9 veranschaulicht. Diese Schaltungsstufen haben die Aufgabe, die Motordrehzahl zu regeln, indem sie an die Ansteuerlogik 31 (Fig. 8) ein entsprechend pulsbreitenmoduliertes Signal liefern. Ein analoger Drehzahlsollwert, beispeilsweise in Form eines Signals im Bereich von 0 bis 5 V, wird von der Mikroprozessorsteuerung 34 (Fign. 5 und 6) über eine Leitung 74 an Eingang 75 des Drehzahlreglers 33 aufgeschaltet und mittels eines Inverters 76 invertiert. Über ein Potentiometer 77 und eine Schaltstufe 78 läßt sich ferner eine Minimaldrehzahl aufschalten.

Der Drehzahlistwert wird von dem an der Motorwelle befestigten Positions- und Inkrementgeber 35 in Form von ±5 V-Impulsen gewonnen (Fig. 11A) und dem Eingang 79 zugeführt. Der Positions- und Inkrementgeber 35 kann in beliebiger bekannter Weise aufgebaut sein. Seine Einzelheiten sind infolgedessen nicht näher dargestellt. Ein Beispiel eines geeigneten Positions- und Inkrementgebers ist im einzelnen in der DE—OS—24 16 114 beschrieben. Die am Eingang 79 erscheinenden Impulse werden in einen, Komparator 80 geformt (Fig. 11b) und dann zwei monostabilen Kippschaltungen 81, 82 zugeführt. Mittels der Kippschaltungen 81, 82 werden sowohl die Vorderflanken als auch die Rückflanken der Signale am Eingang 79 ausgewertet. AUf der Ausgangsleitung 83 erscheint daher eine Folge von Nadelimpulsen (Fig. 11c), deren Frequenz doppelt so groß wie die Folgefrequenz der Signale am Eingang 79 ist. Die Nadelimpulse gemäß Fig. 11C werden von einem aktiven Tiefpaß 84 in ein Analogsignal (Fig. 11d) umgeformt, dessen Amplitude der Motordrehzahl direkt proportional ist. Die analogen Drehzahlsoll- und -istwertsignale werden an den PID-Drehzahlregler 33 angelegt, der als Ausgangssignal im vorliegenden Ausführungsbeispiel ein Signal im Bereich von −12 V bis +12 V liefern kann. Dabei entspricht ein Signal von 0 bis +12 V der Drehrichtung rechts und ein Signal von −12 V bis 0 V der Drehrichtung links bzw. Bremssen. Damit der PID-Regler nicht integriert, solange kein Sollwert anliegt, wird er über einen Optokoppler 85 bei fehlendem Sollwertsignal quasi kurzgeschlossen. Der Optokoppler 85 erlaubt eine Sperrung des Reglers 33 unabhängig davon, ob das Reglerausgangssignal positiv oder negativ ist. Das Ausgangssignal des Drehzahlreglers 33 geht zum einen über eine Leitung 86 an den Eingang 46 des Komparators 48 der Ansteuerlogik 31. Zum anderen wird dieses Signal über ein Potentiometer 87 einem Sägezahngenerator 88 zugeführt. Das Potentiometer 87 erlaubt die Vorgabe der maximalen Pulsbreite der Taktungspulse. Der Sägezahngenerator 88 liefert an seinem Ausgangs 89 ein Sägezahnsignal (Fig. 11e) mit einer konstanten Frequenz von beispielsweise 9 kHz an.

Das Sägezahnpotential wird von dem analogen Ausgangssignal des Drehzahlreglers 33 angehoben oder abgesenkt. Es geht vom Ausgangs 89 an zwei symmetrisch vorgespannte Komparatoren 91, 92. Die Vorspannung beispielsweise des Komparators 91 ist in Fig. 11e bei 93 angedeutet. Der Komparator 91 ist in Fig. 11e bei 93 angedeutet. Der Komparator 91 verarbeitet positive Signale, der Komparator 92 negative Signale. Der Komparator 91 gibt ein Ausgangssignal (Fig. 11f) ab, wenn das Sägezahnpotential die Vorspannung 93 Übersteigt. Entsprechendes gilt für den Komparator 92. Die Komparatoren 91, 92 liefern auf diese Weise Rechtecksignale von −12 V bis +12 V, welche die impulsbreitenmodulierten Taktungssignale darstellen. Die negativen Anteile werden von je einer Diode 94 bzw. 95 abgeblockt. Das pulsbreitenmodulierte Signal wird in einem Schmitt-Trigger 96 umgeformt und invertiert. Das auf diese Weise erhaltene pulsbreitenmodulierte Rechtecksignal von 0 bis +12 V mit einer Frequenz von 9 kHz geht über eine Leitung 97 an den Eingang 45 der Ansteuerlogik 31.

Die Mikroprozessorsteuerung 34 kann in an sich bekannter Weise aufgebaut sein. Sie ist daher im folgenden nur kurz skizziert. Wegen weiterer Einzelheiten sei auf die DE—OSn 29 38 040 und 30 11 587 verwiesen. Zu der Mikroprozessorsteuerung 34 gehören der eigentliche Mikroprozessor 101 und ein Multiplexer 102. Der Mikroprozessor 101 gibt an elektronische Schalter 103 Adressen zum Aufschalten von vorbestimmten Sollwerten. Dem Multiplexer 102 werden vom Mikroprozessor 101 Adressen zugeführt, um über den Multiplexer 102 zu Speichern 104, 105, 106 durchzuschalten. Bei den Speichern 104, 105, 106 handelt es sich ebenso wie bei den Blöcken 107, 108, 109 um Pufferspeicher, wobei die Blöcke 107, 108, 109 die Eingangspuffer und die Speicher 104, 105, 106 die Ausgangspuffer sind. An die Eingänge 110 des Eingangspuffers 107 lassen sich codierte Sollwertsignale anlegen. Den Eingangspuffen 108 und 109 werden dagegen Zeitsignale von Zeitgliedern 115, 116, 117 und 118 zugeführt. Diese Zeitsignale geben unterschiedliche Funktionszeiten für die Arbeitsmaschine 36, beispielsweise ein Schneidzeit für das Abschneiden des Nähfadens, vor. Über einen elektronischen Schaltbaustein 119 wird an einen Kondensator 120 wahlweise einer von acht Widerständen 121 angeschaltet. Dies gestattet es, mit geringem Aufwand unterschiedliche Zeiten vorzugeben. Im rechten oberen Teil der Fig. 6 sind die üblicherweise bei Industrienähmaschinen vorhandenen Ausgänge PFA (Presserfußautomatik), Sn (Schneiden), Wi (Wischen) und Stst (Stichsteller, d.h. Transportrichtungsumstellung) dargestellt. Eingangssignale kommen ferner von einem Stellglied für den Übergang der Nähmaschinenarmwelle von einer ersten in eine zweite Position ohne Schneiden (Anschluß 122) sowie von einem Knieschalter für die Presserfußbetätigung (Anschluß 123). Die Aufschaltung erfolgt dabei jeweils über einen von zwei Optikopplern 124.

Was die Sollwertaufschaltung anbelangt, so lassen sich über eine Spannungsteiler mit Widerständen 125 und Potentiometern 126, 127 unterschiedliche Abhängigkeiten zwischen der Pedalstellung der Nähmaschine und der Größe des jeweiligen Sollwertsignals wahlweise vorgeben. Mit Hilfe des Potentiometers 126 kann dabei die Maximaldrehzahl der Nähmaschine eingestellt werden. Potentiometer 128, 129 bestimmen beispielsweise die Solldrehzahlen für einen Anfangsriegel bzw. einen Endriegel. Potentiometer 130, 131 dienen der Einstellung von Drehzahlen, während die Nähmaschine Stiche ausgehend von einer mittels Fotozelle erkannten Stelle auszählt, um beispielsweise den Endriegel einzuleiten. Die normale Schneiddrehzahl wird Mittels eines Potentiometers 132 vorgegebenen. In Sonderfällen mit erhöhter Schneidgeschwindigkeit wird ein zusätzliche Solldrehzahl über ein Potentiometer 133 aufgeschaltet. Potentiometer 134, 135 bestimmen zwei unterschiedliche Zwischendrehzahlen, beispielsweise·500 U/min und 110 U/min bei der Positionierung. Mittels eines Potentiometers 136 kann eine Solldrehzahl von beispielsweise 20 U/min für die endgültige Positionierung aufgeschaltet werden. Das Potentiometer 137 stellt eine freie Funktion dar; es kann beispielsweise für ein beliebige Drehzahllaufschaltung von außen genutzt werden. Über ein Potentiometer 138 wird am Ende des Positioniervorgangs für eine kurze Zeitspanne eine Sollspannung auf den Drehzahlregler 33 aufgeschaltet, welche die Endstillsetzung herbeiführt.

Der Positions- und Inkrementgeber 35 liefert außer den zur Bestimmung des Drehzahlistwertes genutzen Inkrementsignalen im vorliegenden Ausführungsbeispiel zusätzlich Signale für die Stellungen 'Nadel-oben" und "Nadel-unten" der Industrienähmaschine 36. Das erste dieser Signale liegt an einem Eingang 140, das zweite an einem Eingang 141 (Fig. 5) an. Um diese Signale für die angeschlossene Mikroprozessorsteuerung 34 kompatibel zu machen, werden sie mit Hilfe von Invertern 142, 143 invertiert.

An die Ansteuerlogik 31 geht über einen Transistor 114 (Fig. 9) und NAND-Gatter 145, 146 sowie eine Leitung 147 ein Signal, mittels dessen der Antrieb gestoppt wird, wenn der Schneidvorgang fehlerhaft ausgeführt wird.

Das Stilsetzen des Antriebs zum Positionieren beispielsweise in der "Nadel-oben"-Stellung kann vorteilhaft in der Weise erfolgen, daß sofort bei Abgabe des Stoppbefehls die Istdrehzahl überprüft wird. Liegt diese über 500 U/min, wird mittels des Potentiometers 134 die Solldrehzahl von 500 U/min bis zum Auftritt des nächsten Positionsgebersignals "Nadel-oben" am Eingang 140 ausgeschaltet. Entspricht beispielsweise eine volle Umdrehung der Armwelle der Nähmaschine der Anlieferung von 240 Inkrementsignalen, zählt der Mikroprozessor von diesem nächsten Positionsgebersignal "Nadel-oben" an 160 Inkrementsignal ab, während deren die Solldrehzahl
von 500 U/min aufgeschaltet bleibt. Nach 160
Inkrementen erfolgt dann selbsttätig die Umschaltung vom Sollwert 500 U/min auf den mittels
des Potentiometers 135 vorgegebenen Drehzahlsollwert von 110 U/min. Beim Auftreten des nächsten "Nadel-oben"-Signals wird für 8 Inkremente
auf den Drehzahlsollwert von 20 U/min (Potentiometer 136) umgeschaltet. Anschließend wird für
eine fest vorgegebene Zeitspanne von beispielsweise 6 ms Bremsspannung aufgeschaltet,
die den Antrieb endgültig stillsetzt. Auf diese
Weise sind für die letzte Umdrehung vor dem Anhalten immer konstante Drehzahlverhältnisse
sichergestellt.

## Patentansprüche

1. Antrieb mit Mikroprozessor für Arbeitsmaschinen, insbesondere Industrienähmaschinen (36), mit einem drehzahlgeregelten kollektorlosen Gleichstrommotor (10), dessen Wicklungen (11, 12, 13) über eine in Abhängigkeit con
der Rotorstellung des Motors angesteuerte Leistungsstufe (14) mit Vollbrückenschaltung (T1 bis
T6) gespeist sind, wobei zur Drehzahlregelung
jeweils nur einer der beiden im Zuge der Kommutierung gleichzeitig angesteuerten Brückenzweige
(T2, T4, T6) mit einem getakteten Signal beaufschlagt ist, dadurch gekennzeichnet, daß der
Mikroprozessor mit Programm für Positionierung
des Arbeitswerkzeugs und für Zusatzfunktionen
versehen ist, daß das getaktete Signal ein impulsbreitenmoduliertes Taktungssignal von fest vorgegebener Taktfrequenz ist und daß der Leistungsstufe (14) zusätzlich zur Drehzahlregelschaltung (33) eine auf Überstrom ansprechende
Sicherheitsüberwachungsschaltung (30) zum
Sperren der Vollbrückenschaltung (T1 bis T6) im
Überlastfall zugeordnet ist.
2. Antrieb nach Anspruch 1, wobei jeweils einer
der beiden gleichzeitig angesteuerten Brückenzweige (T2, T4, T6) an Masse liegt und jeweils der
an Masse liegende Brückenzweig (T2, T4, T6) mit
dem Taktungssignal beaufschlagt ist.
3. Antrieb nach Anspruch 1 oder 2, wobei die
Taktfrequenz des Taktungssignals ausreichende
Höhe hat, um akustische Störgeräusche auszuschließen.
4. Antrieb nach einem der vorhergehenden
Ansprüche, wobei zur Stromüberwachung in
jeder Phase eine Vergleicherstufe (T11) liegt, mittels deren die Vollbrückenschaltung (14) bei
einem Überschreiten der Sättigungsspannung
der die Brückenschaltung bildenden Leistungstransistoren (T1 bis T6) sperrbar ist.
5. Antrieb nach einem der vorhergehenden
Ansprüche, wobei sämtliche Brückenzweige (T1
bis T6) im Kommutierungszeitpunkt sperrbar sind.
6. Antrieb nach einem der vorhergehenden
Ansprüche, wobei bei einer Drehrichtungsumkehr
des Antriebs sämtliche Brückenzweige (T1 bis T6)
für eine vorbestimmte Zeitdauer sperrbar sind.
7. Antrieb nach einem der vorhergehenden Ansprüche, wobei der Drehzahlregler (33) während des Stillstands des Antriebs sperrbar ist.
8. Antrieb nach Anspruch 7, wobei zur Sperrung
des Drehzahlreglers (33) während des Stillstands
des Antriebs Optokoppler vorgesehen sind.
9. Antrieb nach einem der vorhergehenden
Ansprüche, wobei mittels der Mikroprozessorsteuerung (34) beim Positionieren stufenweise
verringerte Drehzahlsollwerte bis zum Stillstand
aufschaltbar sind.

## Revendications

1. Dispositif d'entraînement avec microprocesseur pour machines de travail, notamment pour
machines à coudre industrielle (36), comportant
un moteur à courant continu (10) sans collecteur,
à vitesse de rotation réglable, dont les enroulements (11, 12, 13) sont alimentés par un étage de
puissance (14) à montage en pont intégral (T1 à
T6), qui est commandé en fonction de la position
du rotor du moteur, dans lequel une seule des
deux branches du pont (T2, T4, T6) commandées
simultanément au cours de la commutation reçoit
un signal cadencé pour la régulation de vitesse,
caractérisé en ce que le microprocesseur est
pourvu d'un programme assurant le positionnement de l'outil de travail, ainsi que des fonctions
supplémentaires, en ce que le signal cadencé est
un signal de cadence à modulation de largeur
d'impulsions ayant une fréquence d'impulsions
fixe prédéterminée, et en ce qu'il est associé à
l'étage de puissance (14), en plus du circuit de
régulation de vitesse (33) un circuit de surveillance de sécurité (30) sensible aux courants de
surcharge pour le blocage du montage en pont
intégral (T1 à T6) en cas de surcharge.
2. Dispositif d'entraînement selon la revendication 1, dans lequel l'une des deux branches de
pont (T2, T4, T6) commandées simultanément est
mise à la masse et dans lequel la branche de pont
mises à la masse (T2, T4, T6) reçoit le signal de
cadence.
3. Dispositif d'entraînement selon la revendication 1 ou 2, dans lequel la fréquence d'impusions
possède une valeur suffisante pour éliminer les
parasites acoustiques.
4. Dispositif d'entraînement selon une des
revendications précédentes, comportant pour la
surveillance du courant un étage de comparaison
(T11) sur chaque phase, au moyen duquel le
montage en pont intégral (14) peut être bloqué en
cas de dépassement de la tension de saturation
des transistors à puissance (T1 à T6) qui constituent le montage en pont.
5. Dispositif d'entraînement selon une des
revendications précédentes, dans lequel toutes
les branches de pont (T1 à T6) peuvent être
bloquées au moment de la commutation.
6. Dispositif d'entraînement selon une des
revendications précédentes, dans lequel toutes
les branches de pont (T1 à T6) peuvent être
bloquées pendant un temps prédéterminé, lors
d'une inversion du sens de rotation du dispositif
d'entraînement.

7. Dispositif d'entraînement selon une des revendications précédentes, dans lequel le régulateur de vitesse (33) peut être bloqué pendant l'arrêt du dispositif d'entraînement.

8. Dispositif d'entraînement selon la revendication 7, dans lequel des coupleurs optoélectroniques sont prévus pour le blocage du régulateur de vitesse (33) pendant l'arrêt du dispositif d'entraînement.

9. Dispositif d'entraînement selon une des revendications précédentes, dans lequel pour le positionnement, des valeurs de consigne de vitesse de rotation réduites peuvent être introduites jusqu'à l'arrêt au moyen de la commande à microprocesseur (34).

**Claims**

1. A microprocessor drive for working machines, more especially industrial sewing machines (36), with a rotary-speed controlled commutatorless direct current motor (10) of which the windings (11, 12, 13) are energised via a power supply stage (14) with a full bridge circuit (T1 to T6) and controlled in dependence upon the position of the rotor of the motor, wherein, for the rotary-speed control, only one (T2, T4, T6) of two bridging branches simultaneously activated in the commutating action is acted upon with a cadenced signal, characterised in that the microprocessor is provided with a program for the positioning of the working tool and for additional functions, that the cadenced signal is a pulse width modulated cadenced signal of fixed, predetermined cadence frequency and that the power supply stage (14) is associated both with the rotary speed control circuit (33) and with an excess current responsive safety monitoring circuit (30) for blocking the full bridge circuit (T1 to T6) in the event of an overload.

2. A drive according to Claim 1, wherein one (T1, T4, T6) of the two simultaneously activated bridging branches is connected to Ground and that bridging branch (T2, T4, T6) connected to Ground is acted upon with the said cadenced signal.

3. A drive according to Claim 1 or 2, wherein the cadence frequency of the cadenced signal is sufficiently high to avoid generating disturbing acoustic noises.

4. A drive according to any one of the preceding Claims, wherein a comparison stage (T11) is arranged in each Phase for current monitoring, by means of which the full bridge circuit (14) is blockable when the saturation voltage of the supply transistors (T1 to T6) forming the bridge circuit is exceeded.

5. A drive according to any one of the preceding Claims, wherein the bridging branches (T1 to T6) are collectively blockable at the instant of commutation.

6. A drive according to any one of the preceding Claims wherein the bridging branches (T1 to T6) are collectively blockable for a predetermined period of time upon a change in the direction of the rotation of the drive.

7. A drive according to any one of the preceding Claims, wherein the rotary speed controller (33) is blockable whilst the drive is at rest.

8. A drive according to Claim 7, wherein optocouplers are provided for the blocking of the rotary speed controller (33) whilst the drive is at rest.

9. A drive according to any one of the preceding Claims, wherein, during positioning, rotary speed value settings are selectable by means of the microprocessor control (34) which are reduced stepwise until the motor comes to rest.

FIG. 1

Mikropr. steuerung 34

Spannungs- versorgung 15

+100 V
+12 V
+5 V
-5 V
-12 V
0 V

33 Drehzahl- regler

Istwert- geber 35

32 Pulserzeugung

$U_{Mod.}$

$Ua_v$

Ansteuerlogik 31

Treiberstufen 17,18,19

Treiberstufen 20,21,22

Überw. schltg. 30

14

T1  T3  T5

R  S  T

T2  T4  T6

A  B  C

Winkelstellung vom Motor

36 Arbeits- maschine

R

11

10

13

12

S  T

0 081 684

## FIG. 2

| | 0° | 60° | 120° | 180° | 240° | 300° | 360° | |
|---|---|---|---|---|---|---|---|---|
| A | | | | | | | | |
| B | | | | | | | | |
| C | | | | | | | | |
| rechts | 3+2 | 5+2 | 5+4 | 1+4 | 1+6 | 3+6 | | eingesch. |
| links | 1+4 | 1+6 | 3+6 | 3+2 | 5+2 | 5+4 | | Leistungs-trans. |

## FIG. 3

23
24
25

360° el.

## FIG. 4

26
27
28

## FIG. 10

| FIG. 5 | FIG. 6 |

| FIG. 7 | FIG. 8 | FIG. 9 |

2

# FIG. 5

FIG. 6

FIG. 7

FIG. 8

FIG. 9

FIG. 11